# EUROPEAN PATENT APPLICATION

(11) **EP 2 520 423 A1**
(43) Date of publication of application: **07.11.2012**
(21) Application number: 12382120.9
(22) Date of filing: 30.03.2012
(51) Int. Cl.: B32B 1/08, B32B 27/08, B32B 27/32, B32B 27/30, F16L 9/12, F16L 9/128, F16L 11/04

(54) **Oxygen-tight tubular element with a circular section for piping fluids**

(30) Priority: 03.05.2011 ES 201130473 U
(71) Applicant: Tubos Neuplex, S.A., 19171 Cabanillas del Campo (ES)
(72) Inventor: Lopez Touzon, José Manuel, 19171 Cabanillas Del Campo (ES)
(74) Representative: Capitán García, Maria Nuria

(57) **Abstract**

Circular section tubular element for fluid conduction, material plastic whose wall consists of several layers, simple and inexpensive to construct and that resists deformation by expansion and prevents the absorption of oxygen outside.

## Description

### OBJECT OF THE INVENTION

This invention relates to a tubular element with a circular section for piping fluids, made in a plastic material with a wall consisting of several layers, which is simple and cheap to manufacture and which resists deformation by dilatation and prevents the absorption of oxygen from outside.

### BACKGROUND OF THE INVENTION

Tubular elements are known, such as tubes and tube connectors, that consist of several layers of plastic materials including strengthening fillings in one or more of these layers.

The materials used for these tubular components are plastics which as well as the base polymer require a high relative amount of additives as well as several of these to achieve the strength, normally mechanical, required and the barrier to oxygen penetration.

However, these tubular elements do not work correctly when the fluids pass at high temperature and dilate, thus loosing their dimensional constant with the resulting problems in the piping and control of the installation, and may even result in damage to some of the components of the installation.

Moreover, these tubular components, given their amount and type of components, are expensive and complicated to manufacture.

In order to overcome these disadvantages we propose the following invention of a tubular element with few components, that is simple and cheap to manufacture and which resists deformation by dilatation and the absorption of oxygen from outside towards the inside of the pipe.

### DESCRIPTION OF THE INVENTION

In the light of the above, this invention relates to an oxygen-tight tubular element with a circular section for piping fluids, made in plastic material and the wall of which consists of several layers.

This wall comprises an inner layer and an outer layer of Polyethylene of Raised Temperature Resistance (PE-RT) and intermediate layers between these.

One of these intermediate layers is made in Polyethylene of Raised Temperature Resistance (RE-RT) with fibres, arranged randomly as a strengthening material, such that this arrangement resists deformation by dilatation.

Another of the intermediate layers is made in oxygen-tight plastic material, this layer being fixed to its adjacent layers adjacent using adhesive.

One advantage of said tubular element is that the arrangement of the layers maintains the mechanical strength of its joining with accessories, especially when it is a pipe, since the joint is made outside the pipe, and thus there is sufficient wall thickness remaining to weld it without the welding coming into contact with the adhesive layer.

Another advantage of said tubular element is that it is watertight, since the order of the layers does not allow the water to come into contact either with the adhesive or with the fibreglass.

Another advantage of said tubular element is that it has high mechanical strength, since the layer with the fibre wraps all the inner layers, thus increasing said strength.

### DESCRIPTION OF THE DRAWINGS

This description is complemented with a figure that illustrates the preferred example and which does not intend to limit the invention.

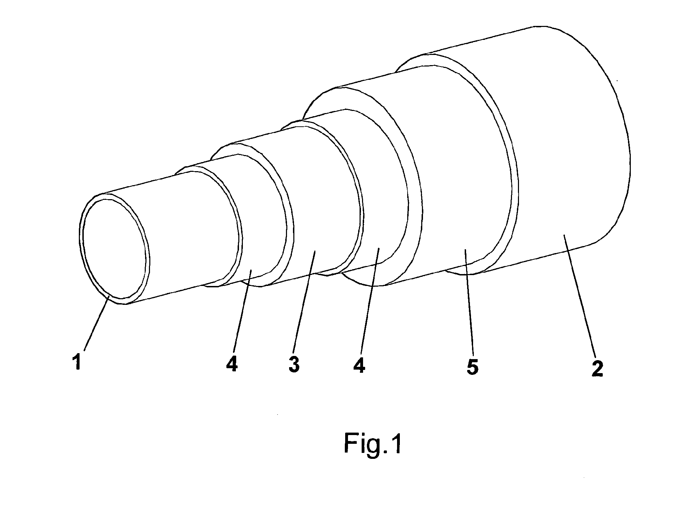

Figure 1 represents a perspective view of the tubular element.

### DETAILED DESCRIPTION OF THE INVENTION

In the light of the above, this invention relates to a tubular element with a circular section for piping fluids, made in plastic material and the wall of which consists of several layers.

The layers are made of plastic materials that are compatible with one another, such that they are extruded at the same time, thus forming the relevant tubular element.

In the description detailed herein, the wall of the tubular element comprises an inner layer and an outer layer of Polyethylene of Raised Temperature Resistance (PE-RT) and intermediate layers located between the inner layer and the outer layer.

These intermediate layers comprise a layer that in turn comprises a matrix of Polyethylene of Raised Temperature Resistance (PE-RT) and fibres arranged randomly as a strengthening material, an oxygen-tight layer of Ethylene Vinyl Alcohol (EVOH) and layers of adhesive.

In particular, in one embodiment of the invention, the layers, from the outer layer to the inner layer, are arranged as follows: outside layer of PE-RT, layer of PE-RT with fibres, adhesive layer, EVOH layer, adhesive layer and inner layer of PE-RT.
this arrangement of layers withstands deformation by dilatation, as a result of the PE-RT layer with fibres, and it also prevents the absorption of oxygen as a result of the EVOH layer.

This arrangement of layers and materials is especially applicable in the piping of liquids at pressure and temperature, where corrosion of the metallic components in the installation produced by excess oxygenation of the water must be avoided, in particular for piping water in heating and air conditioning circuits which may operate safely at high temperatures, reducing the corrosion of boilers, pumps, valves, etc.

Polyethylene of Raised Temperature Resistance (PE-RT) is resistant to temperature according to UNE standard EN-ISO 22391 and does not require additives to meet its function of resistance to dilatation. In no case do we use additives to facilitate its agglomeration with the fibres.

The fibres inside the tube wall control the increase in size, dilatation, in both the length and the diameter of the tubes due to the temperature of the fluid they conduct and the pressure that this fluid exerts upon the tube walls and the EVOH layer controls the absorption of oxygen from the air outside towards the inside of the tube.

The joining of all the layers thus arranged works correctly. The material of the fibres is varied, and we may use fibreglass, carbon fibres, etc., and the material to prevent oxygen absorption can be any oxygen-tight plastic: Ethylene Vinyl Alcohol (EVOH), Chlorinated Polyvinyl Chloride (CPVC), etc.

Similarly, the necessary thickness of the wall is of at least 2 mm.

The tubular element is a pipe.

## Claims

1. An oxygen-tight tubular element with a circular section for piping fluids made in a plastic material with a wall formed by several layers, **characterised in that** said wall comprises an inner layer (1) and an outer layer (2) of Polyethylene of Raised Temperature Resistance and intermediate layers (3,4,5) located between the inner (1) and the outer layer (2), one of said intermediate layers (5) being of Polyethylene of Raised Temperature Resistance with fibres, arranged randomly as strengthening material, such that this arrangement withstands deformation by dilatation, another of the intermediate layers (3) is made in oxygen-tight plastic material, this layer (3) being fixed to its adjacent layers (1,5) via layers of adhesive (4).

2. A tubular element according to claim 1, **characterised in that** the fibres have a length of up to 6 mm.

3. A tubular element according to claim 1, **characterised in that** the wall has a thickness that is equal to or greater than 2 mm.

4. A tubular element according to claim 1, **characterised in that** it is a pipe.

5. A tubular element according to claim 1, **characterised in that** the arrangement of the layers is as follows: an outer layer (2) of Polyethylene of Raised Temperature Resistance, an intermediate layer (5) of Polyethylene of Raised Temperature Resistance with fibres, an intermediate layer of adhesive (4), an intermediate layer of oxygen-tight plastic material (3), an intermediate layer of adhesive (4), an inner layer (1) of Polyethylene of Raised Temperature Resistance.

6. A tubular element according to claims 1 or 5, **characterised in that** the oxygen-tight plastic material is Ethylene Vinyl Alcohol.
